# EUROPEAN PATENT SPECIFICATION

(11) **EP 3 941 860 B1**
(45) Date of publication and mention of the grant of the patent: **24.07.2024**
(21) Application number: 20720118.7
(22) Date of filing: 17.03.2020
(51) Int. Cl.: F27D 3/02, B65G 49/06, F27D 3/00, B65G 47/26, B65G 47/30, B65G 47/54, B65G 13/10

(54) **A TRANSFER SYSTEM OF SLAB-SHAPED ARTICLES IN OUTLET FROM A FIRING KILN**
TRANSFERSYSTEM FÜR PLATTENFÖRMIGE GEGENSTÄNDE IM AUSGANG EINES BRENNOFENS
SYSTÈME DE TRANSFERT D'ARTICLES EN FORME DE DALLE EN SORTIE D'UN FOUR DE CUISSON

(30) Priority: 20.03.2019 IT 201900004039
(43) Date of publication of application: 26.01.2022
(73) Proprietor: SACMI TECH S.p.A., 40026 Imola (BO) (IT)
(72) Inventor: BARDI, Maurizio, 41043 Formigine (MO) (IT)
(74) Representative: Dall'Olio, Christian
(86) International application number: PCT/IB2020/052416
(87) International publication number: WO 2020/188479

(56) References cited:
- EP-A1- 3 388 374
- CA-A- 691 509
- CN-A- 105 501 933
- CN-A- 107 720 214
- JP-A- H08 258 962

## Description

### FIELD OF THE INVENTION

The present invention relates to the technical sector concerning the production of slab-shaped articles which require firing, such as for example ceramic tiles and/or glass slabs.

In particular, the present invention relates to a transfer system of slab-shaped articles in outlet from a firing kiln.

### DESCRIPTION OF THE PRIOR ART

At the outlet of the firing kiln, the slab-shaped articles are arranged in a row, one flanked to another.

The slab-shaped articles of each row must be separated from one another in order to be then transferred to a transport line.

In this regard, a transfer system of the slab-shaped articles is provided at the out of the firing kiln which must carry out, for each row of slab-shaped articles, the extraction and the separation of each slab-shaped article from those adjacent thereto.

A known transfer system comprises a conveyor organ, for example constituted by a roller conveyor, located at the kiln outlet. JP H08 258962 A discloses a transfer system according to the preamble of claim 1.

The roller conveyor receives the rows of slab-shaped articles in outlet from the firing kiln and conveys them downstream, separating the rows from one another.

The transfer system further comprises a looped conveyor belt which is positioned at a terminal portion of the roller conveyor, transversally with respect thereto.

In particular, the looped conveyor belt is arranged so that the belts are interposed between the rollers of the roller conveyor, i.e. each belt is interposed between two adjacent rollers of the roller conveyor.

The conveyor belt is arranged so that the upper branches of the belts are positioned at a lower level with respect to the rollers of the roller conveyor.

When a row of slab-shaped articles reaches an end of the conveyor belt, the roller conveyor halts and, using appropriate actuator means, the upper branches of the belts are raised so as to intercept and raise, beyond the rollers, the row of slab-shaped articles.

In this way, by activating the conveyor belt, the row of slab-shaped articles can be transported laterally with respect to the roller conveyor.

The transfer system further comprises, at an end of the conveyor belt, an extraction belt for receiving the slab-shaped articles transported by the belts of the conveyor.

The extraction belt is actuated at a higher velocity than the belts movement velocity so as to be able to separate the slab-shaped article which is resting thereof with respect to the preceding slab-shaped articles of the row still on the belts.

A transport line, for example constituted by a transport mat, is situated at an end of the extraction belt, and generally arranged transversally to the extraction belt, so as to receive the sheet-shaped article in arrival from the extraction belt and transport it along a transport direction that is perpendicular to the movement direction of the row of slab-shaped articles on the conveyor belt.

In this way, the various slab-shaped articles of each row of slab-shaped articles in outlet from the firing kiln can be separated from one another and positioned on a transport line to be transported towards work or storage stations.

A transfer system of this type however has some drawbacks.

At the end of the extraction belt, located at the transport line, upper abutment rollers are usually present which maintain the sheet-shaped article parallel to the separation strip until all the sheet-shaped article passes beyond the end of the extraction belt, thus preventing a tilting thereof during the transfer step onto the transport line, which would lead to undesired dragging.

In the passage from the extraction belt to the transport line, the slab-shaped article is therefore subjected to a fall, though of slight entity.

In the case of slab-shaped articles of small dimensions, and therefore having a modest weight, this does not lead to any particular problems, and the transfer system, in particular the extraction belt, can reach high velocities and thus guarantee a satisfactory productivity.

In the case, on the other hand, of slab-shaped articles having medium or large dimensions, and therefore being heavier, it might be necessary to reduce the actuation velocity of the extraction belt with the aim of preventing, during the passage to the transport line, the slab-shaped articles from being subject to impacts of an entity such as to damage them.

This has a negative impact on productivity.

### SUMMARY OF THE INVENTION

The aim of the present invention is therefore to provide a novel transfer system of slab-shaped articles for an outlet of a firing kiln that is able to obviate the drawbacks of the prior art described in the foregoing.

In particular, the aim of the present invention is to provide a novel transfer system of slab-shaped articles for an outlet of a firing kiln that is able to ensure high productivity independently of the dimensions and weight of the slab-shaped articles.

The above aims are attained with a novel transfer system of slab-shaped articles for an outlet of a firing kiln, according to claim 1.

### BRIEF DESCRIPTION OF THE DRAWINGS

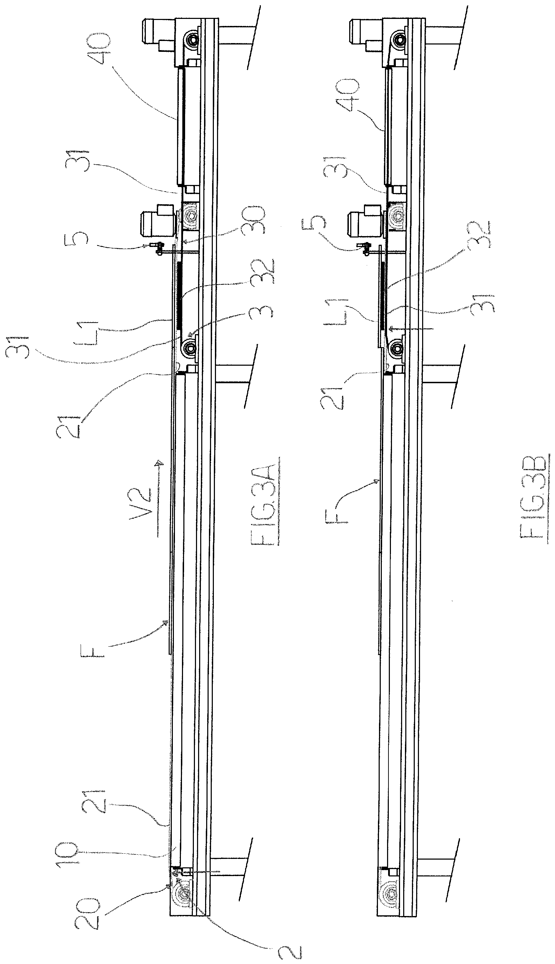

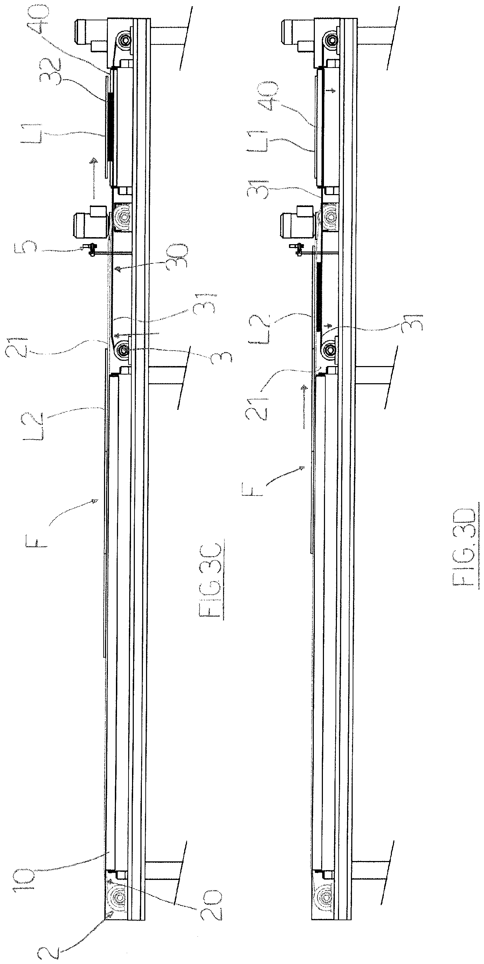

The characteristics of a preferred embodiment of the transfer system proposed by the present invention are described in the following, with reference to the appended tables of drawings, in which:

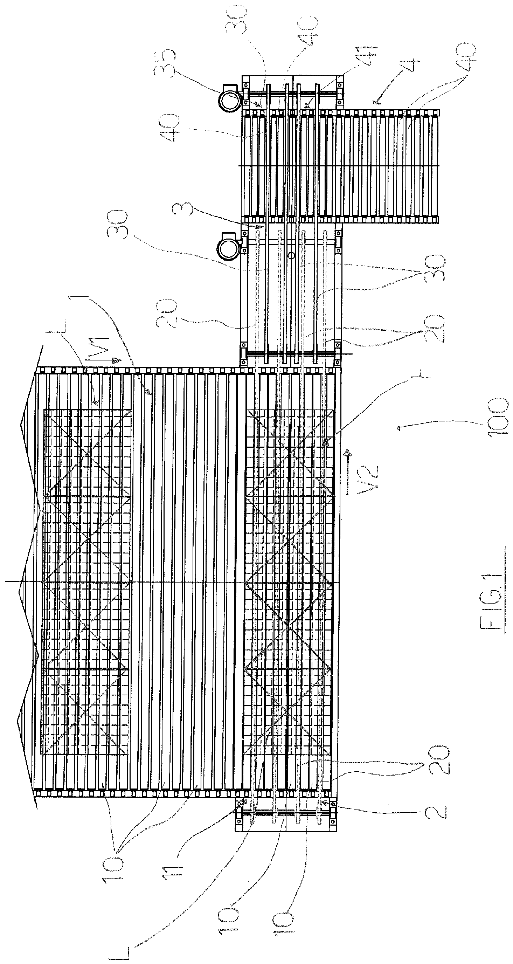

- figure 1 illustrates, in a schematic view from above, the transfer system of the invention;
- figures from 2A to 2D illustrate, again according to schematic views from above, the transfer system of the invention in some operating steps;
- figures from 3A to 3D illustrate, according to frontal views, the transfer system of the invention in respective particular operating steps;
- figures from 4A to 4D illustrate, in larger-scale views, some significant details of the transfer system of the invention of figures 3A-3D.

### DESCRIPTION OF PREFERRED EMBODIMENTS

With reference to the appended tables of drawings, reference numeral (100) relates to a transfer system of slab-shaped articles (L) in outlet from a firing kiln, according to the invention, in its entirety.

The transfer system (100) comprises a roller (10) conveyor (1) configured and predisposed to receive rows of slab-shaped articles (L) in outlet from a firing kiln (not illustrated in the figures) and to convey the rows of slab-shaped articles (L) according to a conveying direction (V1) (see for example figure 1 in which the roller conveyor (1) is partially illustrated).

The transfer system (100) further comprises a first conveyor (2), comprising a first series of belts (20) loop-closed and arranged parallel to one another.

The first conveyor (2) is arranged at a terminal portion (11) of the roller (10) conveyor (1) so that the relative belts (20) are interposed between adjacent rollers (10) of the roller conveyor.

The belts (20) of the first series of belts (20) comprise an upper branch (21) and the first conveyor (2) is arranged so that the upper branches (21) of the belts (20) are positioned at a lower level with respect to the rollers (10) of the roller (10) conveyor (1).

In this way the roller (10) conveyor (1) can convey to and position a row (F) of slab-shaped articles (L) at the second conveyor (2), above the first series of belts (20).

The upper branches (21) of the belts (20), when the roller (10) conveyor (1) has positioned a row (F) of slab-shaped articles (L) in the relative terminal portion (11) at the first conveyor (2), are raisable (for example by means of suitable actuator organs, not illustrated as of known type) so as to abut and lift, beyond the rollers (10), the row (F) of slab-shaped articles (L) (see for example the arrow of figure 3A).

In this way, after the row (F) of slab-shaped articles has been raised by the belts (20) above the level of the rollers (10), the first conveyor (2) can be activated to transfer the row (F) of slab-shaped articles (L) in a transfer direction (V2) perpendicular to the conveying direction (V1) and laterally to the roller (10) conveyor (1) (see for example figure 1 and figures 2A and 3A).

The special characteristics of the transfer system (100) of the invention consist in the fact that it also comprises a second conveyor (3), comprising a second series of belts (30) loop-closed and arranged parallel to one another.

In particular, the first conveyor (2) and the second conveyor (3) are mutually arranged in such a way that the portions of the first series of belts (20) in proximity of the final part of the first conveyor (2) and the portions of the second series of belts (30) in proximity of the initial part of the second conveyor (3) are flanked and parallel to one another, and reciprocally interposed (see in particular figure 1 and figures from 2A to 2D).

The belts (30) of the second series of belts (30) comprise an upper branch (31) and the second conveyor (3) comprises raising elements (32) (for example rubber spacers) which are associated to at least one of the upper branches (31) of the second series of belts (30).

In detail, the second conveyor (3) is arranged with respect to the first conveyor (2) so that the upper branches (31) of the second series of belts (30) are positioned at a lower level with respect to the upper branches (21) of the first series of belts (20) of the first conveyor (2), the raising elements (32) remaining below the upper branches (21) of the first series of belts (20).

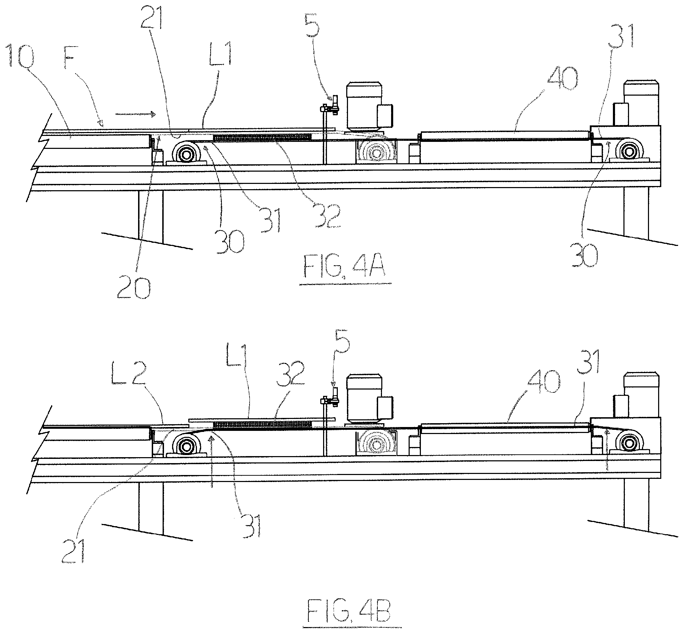

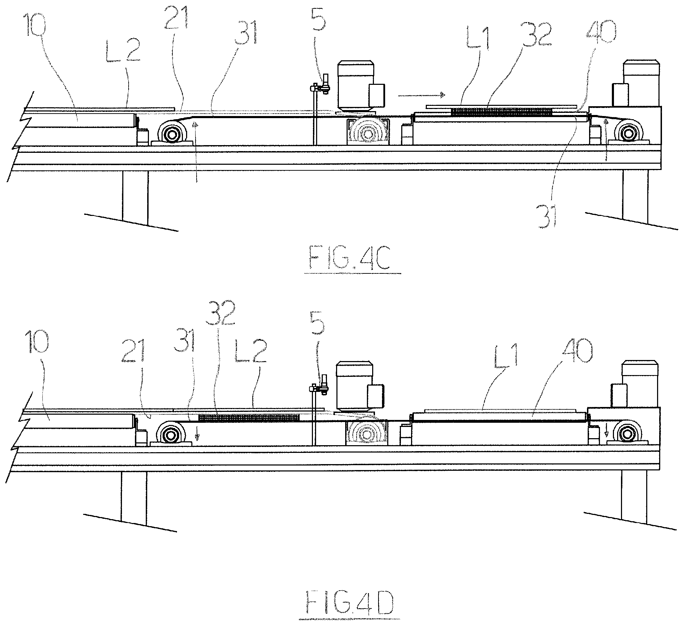

In this way a slab-shaped article (L1) of the row (F) of slab-shaped articles (L) present on the first conveyor (2) can be transferred from the first conveyor (2) to the initial part of the second conveyor (3) onto the second series of belts (30) (see for example figures 3A and 4A).

Once a slab-shaped article (L1) of the row (F) of slab-shaped articles (L) has been transferred to and positioned, by the first conveyor (2), at the initial part of the second conveyor (3), the upper branches (31) of the second series of belts (30) are raisable (for example by means of suitable actuator organs, not illustrated as of known type) so as to position the raising elements (32) at a higher level than the upper branches (21) of the first series of belts (20) of the first conveyor (2) (see in particular, for example, figures 3B and 4B).

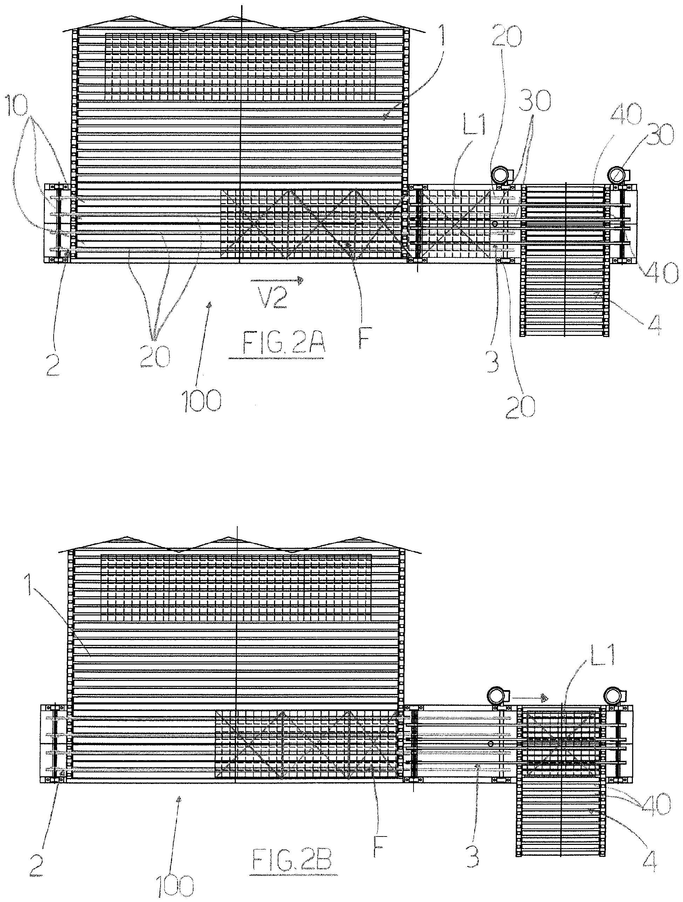

In this way, the raising elements (32) abut and lift the slab-shaped article (L1) beyond the upper branches (21) of the first series of belts (20) of the first conveyor (2), so that the second conveyor (3) can be activated to transfer the slab-shaped article (L1) downstream, separating the slab-shaped article (L1) from the other slab-shaped articles (L) still present on the first conveyor (2) (see in particular figure 2B and figures from 3C to 4C).

Owing to the presence of the second conveyor (3), and the particular arrangement thereof with respect to the first conveyor (2), in particular to the mutual arrangement and mutual interposing of the portions of the first series of belts (20), in the final part of the first conveyor (2), and of the portions of the second series of belts (30), in the initial part of the second conveyor (3), and to the presence of the raising elements (32) on at least an upper branch (31) of the second series of belts (30) of the second conveyor (3), the transfer system (100) of the invention is able to separate, and extract, rapidly and effectively, a slab-shaped article from the remaining other articles of the row of slab-shaped articles present on the first conveyor (2).

The fact of raising the slab-shaped article, which is to be separated and extracted from the remaining other articles of the row present on the first conveyor, leads to avoiding the issues present in the transfer systems of the prior art, in which the articles extracted and separated from the adjacent articles of the row were prone to falling, and were therefore subject to possible damage.

The belts (30) of the second series of belts (30) of the second conveyor (3) are cogged belts which are wound in a closed loop on relative activating cogged pulleys.

This enables, including in the case of slab-shaped articles having significant dimensions and weight, carrying out the separation and extraction of the articles from those adjacent of the row of articles present on the first conveyor (2) with high velocities, with no risk of any sliding.

Further and other advantageous aspects of the transfer system (100) of the invention are explained in the following.

The transfer system (100) is configured so that the first conveyor (2) has a greater length than the width of the roller (10) conveyor (1) so that the portions of the first series of belts (20), interposed with the portions of the second series of belts (30) of the second conveyor (3), project laterally from the roller (10) conveyor (1).

In this way, the zone where the separation of the articles takes place is arranged externally or laterally of the roller conveyor (1).

This enables terminating the extraction of the last article of the row of articles, completely freeing the roller conveyor (1), which will thus be able to convey and position a following row of slab-shaped articles (L) at the first conveyor (2), above the first series of belts (20).

In a further advantageous aspect, the transfer system (100) is configured so that the upper branches (31) of the second series of belts (30) of the second conveyor (3) are raisable so that the raising elements (32) are brought to a higher level than the upper branches (21) of the first series of belts (20), the upper branches (31) of the second series of belts (30) of the second conveyor (3) remaining in a lowered position with respect to the upper branches (21) of the first series of belts (20) of the first conveyor (2) (see for example in particular figure 4A).

This advantageously enables activating the first conveyor (2) to transport and position a following slab-shaped article to the initial part of the second conveyor (3), while the second conveyor (3) is transferring the preceding slab-shaped article downstream.

In a further preferred aspect, the transfer system (100) can comprise detection means (5) (for example constituted by a photocell, or another equivalent optical detection organ), which are positioned and predisposed so as to detect when a slab-shaped article (L1) of the row (F) of slab-shaped articles (L) present on the first conveyor (2) is transferred from the first conveyor (2) to the initial portion of the second conveyor (3), onto the second series of belts (30).

In this way, as soon as the detection means (5) detect the positioning of a slab-shaped article at the initial portion of the second conveyor (3) above the second series of belts (30), the upper branches (31) of the second series of belts (30) can be raised so that the raising elements (32) can abut and lift the slab-shaped article (L1) beyond the upper branches (21) of the first series of belts (20) of the first conveyor (2), and then the second conveyor (3) can be activated to transfer the slab-shaped article downstream, separating and therefore extracting the slab-shaped article from the row of slab-shaped articles still present on the first conveyor (2).

A further and other advantageous aspect of the transfer system (100) of the invention is as follows.

It is configured and realised so as also to comprise a second roller (40) conveyor (4) arranged with a relative part (41) at a terminal portion (35) of the second conveyor (3) so that the belts (30) of the second series of belts (30) of the second conveyor (3) are interposed between rollers (40) of the second roller (40) conveyor (4) (see for example figure 1).

In particular, the second conveyor (3), once the upper branches (31) of the second series of belts (30) have been raised so that the raising elements (32) lift the article (L1) of the row (F) of slab-shaped articles (L), transferred from the first conveyor (2) to the initial part of the second conveyor (3) above the second series of belts (30), beyond the upper branches (21) of the first series of belts (20), is activatable to transfer the slab-shaped article (L1) at the relative terminal part (35) onto the second roller (40) conveyor (4).

Then, the upper branches (31) of the second series of belts (30) of the second conveyor (3) are lowerable with respect to the rollers (40) of the second roller (40) conveyor (4) so as to bring the raising elements (32) below the rollers (40) so that the slab-shaped article (L1) rests on the rollers (40).

In this way, the slab-shaped article, which has been separated and extracted from the row of slab-shaped articles present on the first conveyor (2), is transferred and positioned, rapidly and efficiently, onto the second roller conveyor (40).

The second roller conveyor (40) can then be activatable to transfer the slab-shaped article (L1) in a transport direction (V3), towards, for example, appropriate work or storing stations.

The second series of belts (30) of the second conveyor (3) are instead activatable to return the raising elements (32) to the initial part of the second conveyor (3) onto which, in the meantime, the first conveyor (2) has transferred a following article of the row of slab-shaped articles.

The belts (30) of the second series of belts (30) of the second conveyor (3) can be for example activated to perform a complete revolution, returning the raising elements (32) to the initial part of the second conveyor (3), or can be activated also in the opposite sense, to return the raising elements (32) to the initial part of the second conveyor (3).

The raising elements (32) can be associated to one or more upper branches (31) of the second series of belts (30) of the second conveyor (3).

For example, there might be one only group of raising elements (32), or there might be a plurality of groups of raising elements (32) arranged along the extension of the second series of belts (32), according to the modalities chosen for the activation of the second conveyor (3) (a complete revolution of the belts or a return of the belts to the raising position of the articles in the initial part of the second conveyor).

The following is a description, with reference to the appended figures, of a possible functioning modality of the transfer system (100) of the invention, starting from the situation illustrated in figure 1, in which the roller (10) conveyor (1) has conveyed and positioned a row (F) of slab-shaped articles (L), which had exited the firing kiln, at the terminal part (11) thereof above the first conveyor (2).

The upper branches (21) of the first series of belts (20) of the first conveyor (2) are then raised to abut and raise the row (F) of slab-shaped articles (L) above the rollers (10) of the roller (10) conveyor (1) (see for example the arrow of figure 3A), and thus the first conveyor (2) is activated to transfer, by means of the first series of belts (20), the row (F) of slab-shaped articles (L) along the transfer direction (V2), so as to convey a first slab-shaped article (L1) of the row (F) towards the initial part of the second conveyor (3) onto the second series of belts (30) (see figures 2A, 3A, 4A).

When the detection means (5) detect the sheet-shaped article (L1) at the initial part of the second conveyor (3), the first conveyor (2) is stopped, while the upper branches (31) of the second series of belts (30) of the second conveyor (3) are raised so that the raising elements (32) abut the slab-shaped article (L1) and raise it beyond the upper branches (21) of the first series of belts (20) of the first conveyor (2) (see figures 3B, 4B).

The upper branches (31) of the second series of belts (30) of the second conveyor (3) are raised up to a position so as to remain at a lower level with respect to the upper branches (21) of the first series of belts (20) of the first conveyor (2) (see in particular figure 4B).

At this point, the second conveyor (3) is activated so as to transfer the slab-shaped article (L1) onto the second roller (40) conveyor (4) (see for example figures 2B, 3C and 4C).

The upper branches (31) of the second series of belts (30) of the second conveyor (3) are thus lowerable so as to bring the raising elements (32) below the rollers (40) of the second roller (40) conveyor (4) so that the slab-shaped article (L1) rests on the rollers (40).

The second roller (40) conveyor (4) can then be activated to convey the slab-shaped article (L1) in a transport direction (V3), in order to convey the slab-shaped article, for example, towards special work or storage stations.

In the meantime, the first conveyor (2) can be newly actuated to convey a second slab-shaped article (L2) to the initial part of the second conveyor (3), above the second series of belts (30); the first conveyor (2) is stopped as soon as the detection means (5) detect the sheet-shaped article (L2).

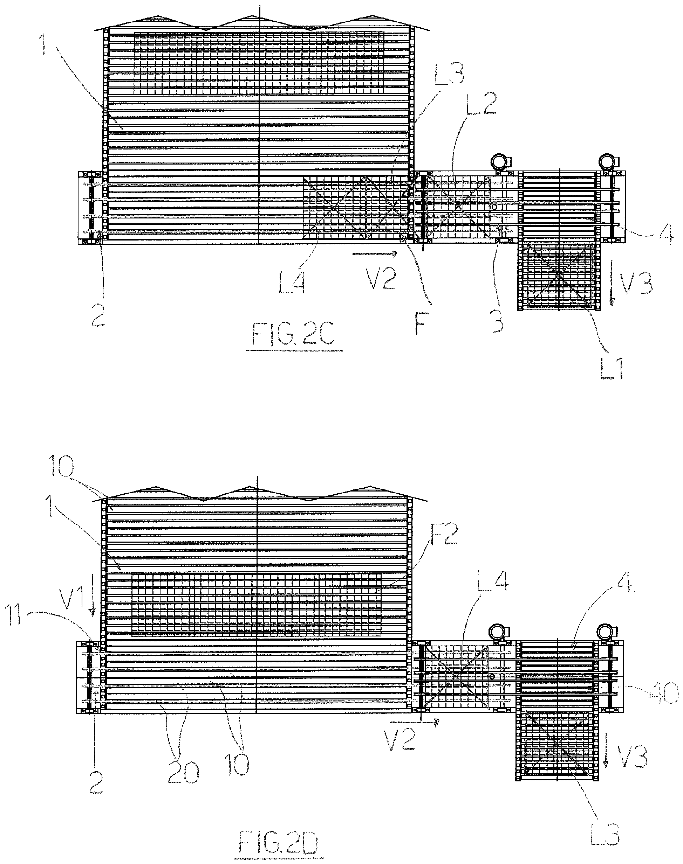

The second conveyor (3), on the other hand, as soon as the first slab-shaped article (L1) has been rested on the rollers (40) of the second roller (40) conveyor (4), is activated to return the raising elements (32) to the initial part of the second conveyor (3), below the second slab-shaped article (L2) (see for example figures 2C, 3D and 4D).

At this point, the above-described operations for raising the second slab-shaped article (L2) from the first series of belts (20) of the first conveyor (2) and transfer it onto the second roller (40) conveyor (4) are repeated.

This sequence of operations will be repeated until all the articles of the row of slab-shaped articles have been first positioned at the initial part of the second conveyor, and then transferred onto the second roller (40) conveyor (4).

For example, in the illustrated case in the figures, in which the row (F) of slab-shaped articles (L) was made up of four articles, the above-described operations will be repeated until the third slab-shaped article (L3) and the fourth slab-shaped article (L4) of the row have been transferred away from the first roller (10) conveyor (1), separated from one another and then transferred onto the second roller (40) conveyor (4) (see in particular figure 2D).

When the last article (L4) of the row (F) of slab-shaped articles (L) has been taken above the initial part of the second conveyor (3), the upper branches (21) of the first series of belts (20) of the first conveyor (2) can be newly lowered to below the position of the rollers (10) of the first roller (10) conveyor (1) so that the first roller (10) conveyor (1) can convey to and position a second row (F2) of slab-shaped articles at the terminal part (11) thereof above the first conveyor (2) (see figure 4D).

The transfer system of slab-shaped articles, such as for example ceramic tiles and the like, has been described with reference to the transfer of slab-shaped articles in outlet from a firing kiln.

This application is not exclusive, in the sense that the transfer system can be used equally for the transfer of slab-shaped articles and the like, such as for example tiles, or other like articles for construction, in outlet from a horizontal dryer.

In substance, the application of the transfer system at the outlet of a firing kiln does not constitute a constraining and exclusive limitation, and the transfer system of the invention can also be utilised for other applications in which the transfer of slab-shaped articles or the like is requested, arranged in a row and for the separation and extraction of the single articles which make up the row.

## Claims

1. A transfer system (100) of slab-shaped articles (L) for an outlet of a firing kiln, comprising:
a roller (10) conveyor (1) configured and predisposed to receive rows of slab-shaped articles (L) from an outlet of a firing kiln and to convey the rows of slab-shaped articles (L) according to a conveying direction (V1);
a first conveyor (2), comprising a first series of belts (20) loop-closed and arranged parallel to one another, the first conveyor (2) being arranged at a terminal portion (11) of the roller (10) conveyor (1) so that the relative belts (20) are interposed between adjacent rollers (10) of the roller conveyor, wherein the belts (20) of the first series of belts (20) comprise an upper branch (21) and wherein the first conveyor (2) is arranged so that the upper branches (21) of the belts (20) are positioned at a lower level with respect to the rollers (10) of the roller (10) conveyor (1), and wherein the upper branches (21) of the belts (20), when the roller (10) conveyor (1) positions a row (F) of slab-shaped articles (L) in the relative terminal portion (11) at the first conveyor (2), are raisable so as to abut and lift, beyond the rollers (10), the row (F) of slab-shaped articles (L), so that the first conveyor (2) can be activated to transfer the row (F) of slab-shaped articles (L) in a transfer direction (V2) perpendicular to the conveying direction (V1) and laterally to the roller (10) conveyor (1),
**characterised in that** it comprises:
a second conveyor (3), comprising a second series of belts (30) loop-closed and arranged parallel to one another, the first conveyor (2) and the second conveyor (3) being mutually arranged in such a way that the portions of the first series of belts (20) in proximity of the final part of the first conveyor (2) and the portions of the second series of belts (30) in proximity of the initial part of the second conveyor (3) are flanked and parallel to one another, and reciprocally interposed, wherein the belts (30) of the second series of belts (30) comprise an upper branch (31) and wherein raising elements (32) are associated to at least one of the upper branches (31) of the second series of belts (30), the second conveyor (3) being arranged with respect to the first conveyor (2) so that the upper branches (31) of the second series of belts (30) are positioned at a lower level with respect to the upper branches (21) of the first series of belts (20) of the first conveyor (2) the raising elements (32) being below the upper branches (21) of the first series of belts (20), so that a slab-shaped article (L1) of the row (F) of slab-shaped articles (L) present on the first conveyor (2) can be transferred from the first conveyor (2) to the initial part of the second conveyor (3) onto the second series of belts (30), and wherein the upper branches (31) of the second series of belts (30) are raisable so as to position the raising elements (32) at a higher level than the upper branches (21) of the first series of belts (20) of the first conveyor (2) so as to abut and raise the slab-shaped article (L1) beyond the upper branches (21) of the first series of belts (20) of the first conveyor (2) so that the second conveyor (3) can be activated to transfer the slab-shaped article (L1) downstream, separating the slab-shaped article (L1) from the other slab-shaped articles (L) still present on the first conveyor (2).

2. The transfer system (100) of claim 1, wherein the first conveyor (2) has a greater length than the width of the roller (10) conveyor (1) so that the portions of the first series of belts (20), interposed with the portions of the second series of belts (30) of the second conveyor (3), project laterally from the roller (10) conveyor (1).

3. The transfer system (100) of any one of the preceding claims, wherein the upper branches (31) of the second series of belts (30) of the second conveyor (3) are raisable so that the raising elements (32) are brought to a higher level than the upper branches (21) of the first series of belts (20), the upper branches (31) of the second series of belts (30) of the second conveyor (3) remaining in a lowered position with respect to the upper branches (21) of the first series of belts (20) of the first conveyor (2).

4. The transfer system (100) of any one of the preceding claims, comprising detection means (5), positioned and predisposed so as to detect when a slab-shaped article (L1) of the row (F) of slab-shaped articles (L) present on the first conveyor (2) is transferred from the first conveyor (2) to the initial portion of the second conveyor (3), onto the second series of belts (30), so that the upper branches (31) of the second series of belts (30) can be raised so that the raising elements (32) can abut and lift the slab-shaped article (L1) beyond the upper branches (21) of the first series of belts (20) of the first conveyor (2).

5. The transfer system (100) of any one of the preceding claims, comprising a second roller (40) conveyor (4) arranged with a relative part (41) at a terminal portion (35) of the second conveyor (3) so that the belts (30) of the second series of belts (30) of the second conveyor (3) are interposed between rollers (40) of the second roller (40) conveyor (4), wherein the second conveyor (3), once the upper branches (31) of the second series of belts (30) have been raised so that the raising elements (32) lift the article (L1) of the row (F) of slab-shaped articles (L), transferred from the first conveyor (2) to the initial part of the second conveyor (3) onto the second series of belts (30), beyond the upper branches (21) of the first series of belts (20), is activatable to transfer the slab-shaped article (L1) to the relative terminal part (35) onto the second roller (40) conveyor (4), and then the upper branches (31) of the second series of belts (30) of the second conveyor (3) are lowerable with respect to the rollers (40) of the second roller (40) conveyor (4) so as to bring the raising elements (32) below the rollers (40) so that the slab-shaped article (L1) rests on the rollers (40), the second roller conveyor (40) then being activatable to transfer the slab-shaped article (L1) in a transport direction (V3) and the second series of belts (30) of the second conveyor (3) being activatable to return the raising elements (32) to the initial part of the second conveyor (3) onto which, in the meantime, the first conveyor (2) has transferred a following article of the row of slab-shaped articles.

## Patentansprüche

1. Transfersystem (100) für brammenförmige Gegenstände (L) im Auslass eines Brennofens, umfassend:
eine Rollenbahn (10) (1), die so konfiguriert und angeordnet ist, dass sie Reihen von plattenförmigen Gegenständen (L) im Auslass eines Brennofens aufnimmt und die Reihen von plattenförmigen Gegenständen (L) gemäß einer Förderrichtung (V1) fördert
einen ersten Förderer (2), der eine erste Reihe von Riemen (20) umfasst, die in einer Schleife geschlossen und parallel zueinander angeordnet sind, wobei der erste Förderer (2) an einem Endabschnitt (11) des Rollenförderers (1) angeordnet ist, so dass die entsprechenden Riemen (20) zwischen benachbarten Rollen (10) des Rollenförderers angeordnet sind, wobei die Riemen (20) der ersten Reihe von Riemen (20) einen oberen Zweig (21) aufweisen und wobei der erste Förderer (2) so angeordnet ist, dass die oberen Zweige (21) der Riemen (20) auf einem niedrigeren Niveau in Bezug auf die Rollen (10) des Rollenförderers (1) positioniert sind, und wobei die oberen Zweige (21) der Bänder (20), wenn der Rollenförderer (1) eine Reihe (F) von plattenförmigen Gegenständen (L) in dem entsprechenden Endabschnitt (11) an dem ersten Förderer (2) positioniert, so anhebbar sind, dass sie an den Rollen (10) anliegen und sie anheben, die Reihe (F) von plattenförmigen Gegenständen (L) über die Rollen (10) hinaus anzustoßen und anzuheben, so dass der erste Förderer (2) aktiviert werden kann, um die Reihe (F) von plattenförmigen Gegenständen (L) in einer Transferrichtung (V2) senkrecht zur Förderrichtung (V1) und seitlich zum Rollen-(10)-Förderer (1) zu übertragen,
**dadurch gekennzeichnet, dass** sie umfasst:
einen zweiten Förderer (3), der eine zweite Reihe von Bändern (30) umfasst, die in einer Schleife geschlossen und parallel zueinander angeordnet sind, wobei der erste Förderer (2) und der zweite Förderer (3) so zueinander angeordnet sind, dass die Abschnitte der ersten Reihe von Bändern (20) in der Nähe des Endteils des ersten Förderers (2) und die Abschnitte der zweiten Reihe von Bändern (30) in der Nähe des Anfangsteils des zweiten Förderers (3) flankiert und parallel zueinander und wechselseitig dazwischen angeordnet sind, wobei die Bänder (30) der zweiten Reihe von Bändern (30) einen oberen Zweig (31) umfassen und wobei Hebeelemente (32) mit mindestens einem der oberen Zweige (31) der zweiten Reihe von Bändern (30) verbunden sind, der zweite Förderer (3) in Bezug auf den ersten Förderer (2) so angeordnet ist, dass die oberen Schenkel (31) der zweiten Reihe von Bändern (30) in Bezug auf die oberen Schenkel (21) der ersten Reihe von Bändern (20) des ersten Förderers (2) auf einem niedrigeren Niveau positioniert sind, wobei die Erhöhungselemente (32) unterhalb der oberen Schenkel (21) der ersten Reihe von Bändern (20) liegen, so dass ein plattenförmiger Artikel (L1) der Reihe (F) von plattenförmigen Artikeln (L), die auf dem ersten Förderer (2) vorhanden sind, von dem ersten Förderer (2) zu dem Anfangsteil des zweiten Förderers (3) auf die zweite Reihe von Bändern (30) übertragen werden kann, und wobei die oberen Zweige (31) der zweiten Reihe von Bändern (30) anhebbar sind, um die Anhebeelemente (32) auf einem höheren Niveau als die oberen Zweige (21) der ersten Reihe von Bändern (20) des ersten Förderers (2) zu positionieren, um den plattenförmigen Artikel (L1) über die oberen Zweige (21) der ersten Reihe von Bändern (20) des ersten Förderers (2) hinaus anzustoßen und anzuheben, so dass der zweite Förderer (3) aktiviert werden kann, um den plattenförmigen Artikel (L1) stromabwärts zu übertragen, den plattenförmigen Artikel (L1) von den anderen plattenförmigen Artikeln (L), die sich noch auf dem ersten Förderer (2) befinden, zu trennen.

2. Das Transfersystem (100) nach Anspruch 1, wobei der erste Förderer (2) eine größere Länge als die Breite des Rollenförderers (10) (1) hat, so dass die Abschnitte der ersten Reihe von Bändern (20), die mit den Abschnitten der zweiten Reihe von Bändern (30) des zweiten Förderers (3) dazwischen liegen, seitlich von dem Rollenförderer (10) (1) vorstehen.

3. Das Transfersystem (100) nach einem der vorhergehenden Ansprüche, wobei die oberen Zweige (31) der zweiten Reihe von Bändern (30) des zweiten Förderers (3) anhebbar sind, so dass die Anhebeelemente (32) auf ein höheres Niveau als die oberen Zweige (21) der ersten Reihe von Bändern (20) gebracht werden, wobei die oberen Zweige (31) der zweiten Reihe von Bändern (30) des zweiten Förderers (3) in einer abgesenkten Position in Bezug auf die oberen Zweige (21) der ersten Reihe von Bändern (20) des ersten Förderers (2) bleiben.

4. Das Übergabesystem (100) nach einem der vorhergehenden Ansprüche, das Erfassungsmittel (5) umfasst, die so positioniert und angeordnet sind, dass sie erfassen, wenn ein plattenförmiger Artikel (L1) der Reihe (F) plattenförmiger Artikel (L), die auf dem ersten Förderer (2) vorhanden sind, von dem ersten Förderer (2) zu dem Anfangsabschnitt des zweiten Förderers (3) übergeben wird, auf die zweite Reihe von Bändern (30) überführt, so dass die oberen Schenkel (31) der zweiten Reihe von Bändern (30) angehoben werden können, so dass die Hebeelemente (32) an den oberen Schenkeln (21) der ersten Reihe von Bändern (20) des ersten Förderers (2) anliegen und den plattenförmigen Artikel (L1) anheben können.

5. Das Transfersystem (100) nach einem der vorhergehenden Ansprüche, das einen zweiten Rollenförderer (4) umfasst, der mit einem entsprechenden Teil (41) an einem Endabschnitt (35) des zweiten Förderers (3) angeordnet ist, so dass die Bänder (30) der zweiten Reihe von Bändern (30) des zweiten Förderers (3) zwischen den Rollen (40) des zweiten Rollenförderers (4) angeordnet sind, wobei der zweite Förderer (3), sobald die oberen Zweige (31) der zweiten Reihe von Bändern (30) angehoben wurden, so dass die Anhebeelemente (32) den Artikel (L1) der Reihe (F) von plattenförmigen Artikeln (L), die von dem ersten Förderer (2) zu dem anfänglichen Teil des zweiten Förderers (3) auf die zweite Reihe von Bändern (30) übertragen wurden, über die oberen Zweige (21) der ersten Reihe von Bändern (20) hinaus anheben, aktiviert werden kann, um den plattenförmigen Artikel (L1) zum entsprechenden Endteil (35) auf den zweiten Rollenförderer (40) zu überführen, und dann die oberen Zweige (31) der zweiten Reihe von Bändern (30) des zweiten Förderers (3) in Bezug auf die Rollen (40) des zweiten Rollenförderers (40) abgesenkt werden können, um die Hebeelemente (32) unter die Rollen (40) zu bringen, so dass der plattenförmige Artikel (L1) auf den Rollen (40) ruht, der zweite Rollenförderer (40) dann aktiviert werden kann, um den plattenförmigen Artikel (L1) in einer Transportrichtung (V3) zu transportieren, und die zweite Reihe von Riemen (30) des zweiten Förderers (3) aktiviert werden kann, um die Hebeelemente (32) zum Anfangsteil des zweiten Förderers (3) zurückzubringen, auf den in der Zwischenzeit der erste Förderer (2) einen folgenden Artikel der Reihe plattenförmiger Artikel übertragen hat.

## Revendications

1. Système de transfert (100) d'articles en forme de brames (L) en sortie d'un four de cuisson, comprenant :
un convoyeur à rouleaux (10) (1) configuré et prédisposé pour recevoir des rangées d'articles en forme de brames (L) en sortie de four de cuisson et pour transporter les rangées d'articles en forme de brames (L) selon une direction de transport (V1) ;
un premier convoyeur (2), comprenant une première série de courroies (20) fermées en boucle et disposées parallèlement les unes aux autres, le premier convoyeur (2) étant disposé à une partie terminale (11) du convoyeur à rouleaux (10) (1) de sorte que les courroies relatives (20) sont interposées entre les rouleaux adjacents (10) du convoyeur à rouleaux, dans laquelle les courroies (20) de la première série de courroies (20) comprennent une branche supérieure (21) et dans laquelle le premier convoyeur (2) est disposé de manière à ce que les branches supérieures (21) des courroies (20) soient positionnées à un niveau inférieur par rapport aux rouleaux (10) du convoyeur à rouleaux (10) (1), et dans lequel les branches supérieures (21) des courroies (20), lorsque le convoyeur à rouleaux (10) (1) positionne une rangée (F) d'articles en forme de plaques (L) dans la partie terminale relative (11) au premier convoyeur (2), sont relevables de manière à venir en butée et à se soulever au-delà des rouleaux (10), la rangée (F) d'articles en forme de plaques (L), de sorte que le premier convoyeur (2) puisse être activé pour transférer la rangée (F) d'articles en forme de plaques (L) dans une direction de transfert (V2) perpendiculaire à la direction de transport (V1) et latéralement par rapport au convoyeur à rouleaux (10) (1),
**caractérisé par le fait qu'**il comprend
un second convoyeur (3), comprenant une seconde série de courroies (30) fermées en boucle et disposées parallèlement les unes aux autres, le premier convoyeur (2) et le second convoyeur (3) étant mutuellement disposés de telle sorte que les portions de la première série de courroies (20) à proximité de la partie finale du premier convoyeur (2) et les portions de la seconde série de courroies (30) à proximité de la partie initiale du second convoyeur (3) sont flanquées et parallèles les unes aux autres, et réciproquement interposées, les courroies (30) de la deuxième série de courroies (30) comprennent une branche supérieure (31) et des éléments de levage (32) sont associés à au moins une des branches supérieures (31) de la deuxième série de courroies (30), le second convoyeur (3) étant disposé par rapport au premier convoyeur (2) de manière à ce que les branches supérieures (31) de la seconde série de courroies (30) soient positionnées à un niveau inférieur par rapport aux branches supérieures (21) de la première série de courroies (20) du premier convoyeur (2), les éléments de levage (32) étant situés en dessous des branches supérieures (21) de la première série de courroies (20), de sorte qu'un article en forme de plaque (L1) de la rangée (F) d'articles en forme de plaque (L) présents sur le premier convoyeur (2) puisse être transféré du premier convoyeur (2) à la partie initiale du second convoyeur (3) sur la seconde série de courroies (30), et dans laquelle les branches supérieures (31) de la deuxième série de courroies (30) sont relevables de manière à positionner les éléments de levage (32) à un niveau plus élevé que les branches supérieures (21) de la première série de courroies (20) du premier convoyeur (2) de manière à venir en butée et à soulever l'article en forme de plaque (L1) au-delà des branches supérieures (21) de la première série de courroies (20) du premier convoyeur (2) afin que le deuxième convoyeur (3) puisse être activé pour transférer l'article en forme de plaque (L1) vers l'aval, en séparant l'article en forme de plaque (L1) des autres articles en forme de plaque (L) encore présents sur le premier convoyeur (2).

2. Le système de transfert (100) de la revendication 1, dans lequel le premier convoyeur (2) a une longueur supérieure à la largeur du convoyeur à rouleaux (10) (1), de sorte que les parties de la première série de courroies (20), interposées avec les parties de la deuxième série de courroies (30) du deuxième convoyeur (3), font saillie latéralement par rapport au convoyeur à rouleaux (10) (1).

3. Le système de transfert (100) de l'une quelconque des revendications précédentes, dans lequel les branches supérieures (31) de la deuxième série de courroies (30) du deuxième convoyeur (3) sont relevables de manière à ce que les éléments de relevage (32) soient amenés à un niveau supérieur à celui des branches supérieures (21) de la première série de courroies (20), les branches supérieures (31) de la deuxième série de courroies (30) du deuxième convoyeur (3) restant en position abaissée par rapport aux branches supérieures (21) de la première série de courroies (20) du premier convoyeur (2).

4. Le système de transfert (100) de l'une quelconque des revendications précédentes, comprenant des moyens de détection (5), positionnés et prédisposés de manière à détecter lorsqu'un article en forme de plaque (L1) de la rangée (F) d'articles en forme de plaque (L) présents sur le premier convoyeur (2) est transféré du premier convoyeur (2) vers la partie initiale du second convoyeur (3), sur la deuxième série de courroies (30), de sorte que les branches supérieures (31) de la deuxième série de courroies (30) puissent être soulevées pour que les éléments de levage (32) puissent venir en butée et soulever l'article en forme de plaque (L1) au-delà des branches supérieures (21) de la première série de courroies (20) du premier convoyeur (2).

5. Le système de transfert (100) de l'une quelconque des revendications précédentes, comprenant un deuxième convoyeur à rouleaux (40) (4) disposé avec une partie relative (41) à une partie terminale (35) du deuxième convoyeur (3) de sorte que les courroies (30) de la deuxième série de courroies (30) du deuxième convoyeur (3) sont interposées entre les rouleaux (40) du deuxième convoyeur à rouleaux (40) (4), dans lequel le deuxième convoyeur (3), une fois que les branches supérieures (31) de la deuxième série de courroies (30) du deuxième convoyeur (3) sont interposées entre les rouleaux (40) de la deuxième série de courroies (30) du deuxième convoyeur (3), une fois que les branches supérieures (31) de la deuxième série de courroies (30) ont été soulevées de manière à ce que les éléments de levage (32) soulèvent l'article (L1) de la rangée (F) d'articles en forme de plaques (L), transférés du premier convoyeur (2) à la partie initiale du deuxième convoyeur (3) sur la deuxième série de courroies (30), au-delà des branches supérieures (21) de la première série de courroies (20), est activé pour transférer l'article en forme de plaque (L1) vers la partie terminale relative (35) sur le second convoyeur à rouleaux (40) (4), puis les branches supérieures (31) de la seconde série de courroies (30) du second convoyeur (3) sont abaissées par rapport aux rouleaux (40) du second convoyeur à rouleaux (40) (4) de manière à amener les éléments de levage (32) sous les rouleaux (40) afin que l'article en forme de plaque (L1) repose sur les rouleaux (40), le deuxième convoyeur à rouleaux (40) peut alors être activé pour transférer l'article en forme de plaque (L1) dans une direction de transport (V3) et la deuxième série de courroies (30) du deuxième convoyeur (3) peut être activée pour renvoyer les éléments de levage (32) vers la partie initiale du deuxième convoyeur (3) sur laquelle, entre-temps, le premier convoyeur (2) a transféré un article suivant de la rangée d'articles en forme de plaque.
